# EUROPEAN PATENT SPECIFICATION

(11) **EP 2 880 732 B1**
(45) Date of publication and mention of the grant of the patent: **27.02.2019**
(21) Application number: 13824831.5
(22) Date of filing: 31.07.2013
(51) Int. Cl.: H02H 9/08, G05F 1/14, H02J 3/18, H02P 13/06, H01F 29/04

(54) **A DEVICE COMPRISING A CONTROLLABLE EARTHING TRANSFORMER**
VORRICHTUNG MIT EINEM STEUERBAREN ERDUNGSTRANSFORMATOR
DISPOSITIF COMPRENANT UN TRANSFORMATEUR DE MISE À LA TERRE CONTRÔLABLE

(30) Priority: 03.08.2012 SE 1250913
(43) Date of publication of application: 10.06.2015
(73) Proprietor: Swedish Neutral AB, 196 31 Kungsängen (SE)
(72) Inventor: WINTER, Klaus, S-196 37 Kungsängen (SE); WINTER, Andreas, S-104 05 Stockholm (SE)
(74) Representative: Bjerkéns Patentbyrå KB (Stockholm)
(86) International application number: PCT/SE2013/050943
(87) International publication number: WO 2014/021773

(56) References cited:
- EP-A1- 0 164 321
- EP-A1- 0 164 321
- WO-A1-03/044612
- DE-C- 866 813
- FR-A1- 2 789 817
- GB-A- 544 838
- GB-A- 544 838
- SE-B- 437 096
- SU-A1- 1 628 130
- US-A- 1 731 906
- US-A- 1 873 777
- US-A- 3 690 739
- CARLOS GRANDE-MORAN: 'Phase-shifting Transformer Modeling in PSS@E' POWER TECHNOLOGY, SIEMENS ENERGY, INC. no. 111, March 2012, XP055184308 Retrieved from the Internet: <URL:http://w3.usa.siemens.com/datapool/us/ SmartGrid/docs/pti/20 12March/PDFs/Phase_Shifting_Transformer_Mod eling.pdf> [retrieved on 2013-12-11]
- DETJEN, E. R. ET AL.: 'Grounding transformer applications and associated protection schemes' CONFERENCE RECORD OF THE 1990 IEEE INDUSTRY APPLICATIONS SOCIETY ANNUAL MEETING 07 October 1990 - 12 October 1990, SEATTLE, WA, USA, pages 1982 - 1983, XP032134246
- SHIPP, D. D. ET AL.: 'Characteristics of different power systems neutral grounding techniques: facts and fiction' CONFERENCE RECORD OF THE 1990 ANNUAL PULP AND PAPER INDUSTRY TECHNICAL CONFERENCE 18 June 1990 - 22 June 1990, SEATTLE, WA, USA, pages 107 - 116, XP010046584

## Description

The present invention concerns a device comprising a controllable grounding transformer arranged to compensate for a residual operating current in a grounding of an alternating-current network having a power transformer according to the preamble of claim 1. The invention further relates to a method of producing a zero-point voltage in an alternating-current network by means of a power transformer according to the preamble of claim 6.

### THE BACKGROUND OF THE INVENTION AND PRIOR ART

Today, transfer of electric power is mainly performed by means of a three phase voltage system. To fulfil the basic demands of the system - production and consumption of power must be in balance at every instance - large national transmission networks have been created, where all producers and consumers of electric power are connected. Then, connecting the national transmission networks to transnational transmission networks provides additional advantages with respect to the basic demand. One such transmission network is for example the Scandinavian NORDEL network.

To reduce the transmission losses in the transmission networks, the transport of energy is effected at high voltage, preferably 400 kV. The energy output to the consumers from the transmission network is carried out via distribution transformers, which, in turn, each supplies a limited geographical area. The distribution is mainly effected at 10-30 kV voltage. Large industry customers may here be coupled directly to the distribution network, while smaller consumers and households are supplied over yet another transformation to 400/230 V.

Due to its mesh structure, the transmission network has a high availability. The distribution networks, however, that have a radial network structure, constitute the weak link in the transmission system. Errors occurring in an individual distribution line may lead to disconnection of large groups of consumers. The error protection technology therefore aims at improving the availability of the distribution networks.

In this context, it is important to note that the majority of the electric faults occur as the result of isolation break-through between one phase and earth - a so-called grounding error, when the actual transmission of energy is limited to the voltage system between the phases. From a protection point-of-view it would be desirable to treat the grounding errors separately, and if possible to limit the residual operating current to such an extent that line disconnection can be avoided.

The most successful protection concept is based on this basic principle developed already in 1917 by Waldemar Petersen. By connecting the zero point of the three-phase system to ground over an inductance having a matched network capacitance - the so-called Petersen coil - the residual operating current can be reduced by a factor ten to fifty. The current limitation is normally sufficient to guarantee the self-quenching of single-phase arcs, which represent the main part of the disturbances in air-line networks.

Today, Petersén's resonance grounding dominates in the Scandinavian and other European distribution networks. These networks have an overall availability that is superior to other comparable distribution networks having alternative concepts for system grounding.

In the ongoing conversion of the distribution networks from air-line networks to underground cable networks the residual operating currents increase by a factor 30 to 50 due to the higher capacitance of the cable, which affects Petersén's resonance grounding twofold: on one hand, the self-quenching effect decreases in the remaining air-line part as the residual operating currents increase, to eventually stop completely; and on the other hand, the self-quenching effect does not work at all in a cable network due to the short distance between the live conductor and ground (the shield). Thus, the problem is the non-compensated for residual current.

This problem was discovered and solved in the beginning of the 90's. The device for residual current compensation developed at that point in time is used today as a complement to the Petersen coil, however has also been applied in distribution networks which up until then were designed based on completely different grounding concepts.

In contrast to the Petersen coil, which exclusively increases the source impedance in the grounding circuit, the residual current compensation eliminates the driving voltage in connection with ground faults by superimposing a counter voltage. This is not a completely trivial task, since the driving voltage is only partly known initially.

According to Thévenin's theorem, the fault current is determined by the driving voltage at the location of the fault, the fault impedance and the source impedance. Conversely: to achieve the complete elimination of the driving voltage at the location of the fault, it is required that the driving voltage be eliminated at the location of the fault, while the fault impedance is unknown and the source impedance can only be partly influenced via the Petersen coil.

The driving voltage at the location of the fault is represented by the phase voltage of the feeding distribution transformer in the phase which is impaired by the grounding fault (known and measurable respectively), plus the load-current depending voltage drop between the feeding transformer and the actual location of the fault, which may be far out in the (unknown) network.

Determining the latter became possible by development of a new measurement procedure, which was first published in the beginning of the 90's (see: Winter, K., "Swedish Distribution Networks - A New Method for Earthfault Protection in Cable- and Overhead Systems", 5th International Conference on Power System Protection. IEE conference publication No. 368, York/UK 1993).

EP-0164321 A1 discloses a device for compensation of the ground fault current in a power network. The device comprises two adjustable phase shifting transformers connected to a separated power input.

GB-544838 A relates to improvements in and relating to methods of protecting alternating current electric systems.

FR-2789817 A1 and DE-866813 C also disclose devices for compensation of the ground fault current in a power network.

The remaining problem, to generate a counter voltage with a possibility to control amplitude and phase angle in relation to the phase voltage of the distribution transformer, was solved by means of power electronics (pulse width modulated inverter). Today, there are reference plants for residual current compensation in power networks of voltage levels between 6 kV and 110 kV.

The power demand for residual current compensation depends on the voltage level, the size of the network and attenuation relationships. The distribution networks in the dense inhabited areas of the world may attain capacitive grounding currents in excess of 1000 A with uncompensated residual operating currents in the order of 100 A and more. The power demand for compensating the residual operating current in such a network may be far more than 1000 kVA.

Inverters of this magnitude are relatively costly. The present invention proposes a simpler device for complete compensation of the residual operating current in order to lower the costs and improve the reliability.

### SUMMARY OF THE INVENTION

The object of the present invention is to solve the above problem and offer a simpler device for compensating for the residual operating current. Another object is to eliminate the residual operating current completely. Yet another object is to improve the reliability of the compensation device and thereby the reliability of actual power transmission. Yet another object is to lower the costs for the residual operating current compensation.

The objects are attained by means of a device defined in the preamble of claim 1, which is characterized in that a primary winding of the grounding transformer is coupled to the power network or a power source synchronized to the power network and a secondary winding of the grounding transformer is coupled between a zero point of the power network and ground, wherein the grounding transformer comprises two or more tap-changers and the device includes a unit configured to control the tap-changers for controlling secondary voltages of the grounding transformer with respect to amplitude and phase angle in relation to the voltage system of the feeding power transformer.

The advantage of the invention is that the number of line disconnections decreases or can be avoided completely. Thus, by means of the new device, the availability of the distribution network improves. The new device can be manufactured at low cost and is relatively simple to install in existing distribution networks.

According to one embodiment of the invention, the grounding transformer operates in three phases.

The device according to the invention may be used in different power networks having a single or three phase system.

According to another embodiment of the invention, said unit is a control and measurement unit coupled to the grounding transformer in order to control said secondary voltages between the zero point of the power network and ground.

The device according to the invention may thereby be used together with known control and measurement units for compensation of the residual operating current.

According to yet another embodiment of the invention, the control and measurement unit is arranged to decide which of the secondary voltages that is to be coupled between the zero point of the power network and ground.

According to one embodiment of the invention, the control and measurement unit is arranged to control the secondary voltage of the grounding transformer until a condition for a full compensation for the residual operating current has been fulfilled.

The device according to the invention may thereby be used together with known control and measurement units for complete compensation for the residual operating current.

According to another embodiment of the invention, the device is arranged to be used in parallel with a Petersen coil in order to eliminate a non-compensated for residual operating current from the Petersen coil.

The device according to the invention may improve the effect of an existing compensation device by being installed in parallel with a Petersen coil device.

The objects are also attained by means of a method defined in the preamble of claim 6, which is characterized by using a device comprising a grounding transformer a primary winding of which is coupled to the power network or a power source synchronized to the power network and a secondary winding of which is coupled to between a zero point of the power network and ground, wherein the grounding transformer comprises two or more tap-changers and the device includes a unit configured to control the tap-changers, and controlling the secondary voltages of the grounding transformer in respect of amplitude and phase angle in relation to the voltage system of the feeding power transformer.

The method according to the invention improves the reliability of the compensation device. The availability is likewise improved.

According to one embodiment, said unit is a control and measurement unit coupled to the grounding transformer in order to control said secondary voltages between a zero-point of the power network and ground.

The objects are also attained by means of a method of producing a zero-point voltage in an alternating current power network by means of a power transformer, characterized by a device comprising a grounding transformer with a primary winding coupled to the power network or a power source synchronized to the power network and a secondary winding coupled between a zero point of the power network and ground, wherein the grounding transformer comprises two or more tap-changers and a unit configured to control the tap-changers, and said unit is a control and measurement unit coupled to said grounding transformer to control a secondary voltage of the grounding transformer between the zero-point of the power network and ground, wherein
- the control and measurement unit regulates the secondary voltage with respect to amplitude and phase angle in relation to the voltage system of the feeding power transformer,
- the control and measurement unit decides which of the secondary voltages that is to be coupled between the zero point of the power network and ground, and
- the control and measurement unit regulates the secondary voltage until a condition for a full compensation for the residual operating current has been fulfilled.

According to one embodiment of the invention, the grounding transformer operates in three phases.

The objects are also achieved by using the above device for compensating for a residual operating current.

The objects are likewise achieved by using the device according to the above, or the method according to the above, in parallel with a Petersen coil to eliminate a non-compensated for residual operating current from the Petersen coil.

### BRIEF DESCRIPTION OF THE DRAWINGS

- Figure 1: shows a single-line diagram over a distribution network having a known device for compensating for the residual operating current.
- Figure 2: shows the same distribution network having a device for compensating for the residual operating current according to the invention.
- Figure 3: shows a vector diagram for the driving voltage depending on the grounding error location in the distribution network.
- Figures 4a,b: show the circuit diagram and vector diagram for a transformer according to the invention.

### DETAILED DESCRIPTION THE INVENTION

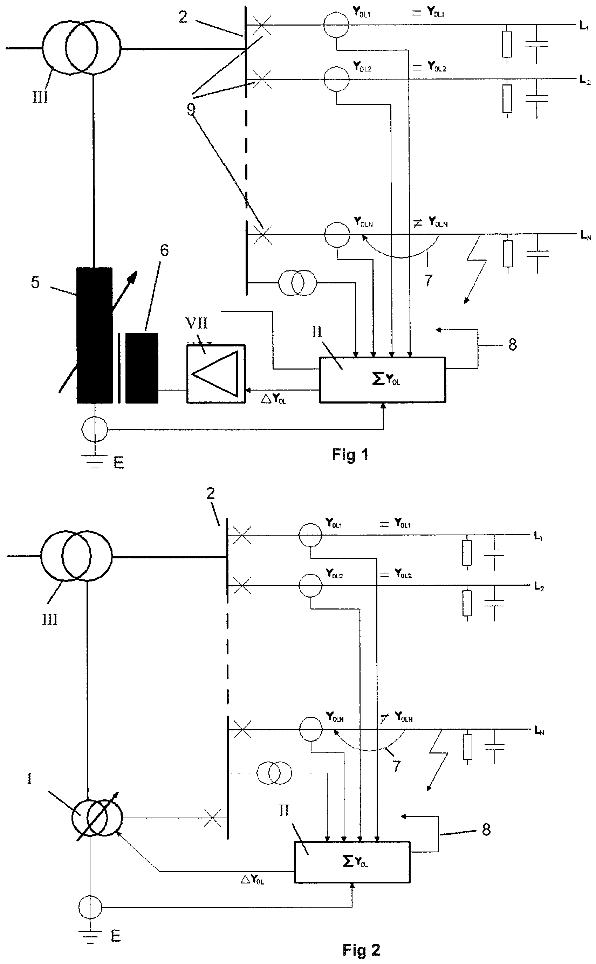

Figures 1 and 2 show a distribution network with a control and measurement unit II for detection of grounding errors and control of a compensation device. Further, a feeding transformer III, a collector rail 4 and a number of output distribution lines L₁, L₂ - L_{N} with a respective line switch 9 at the collector rail 4 are shown.

Electric power transmission is usually effected by means of a three phase system, however also one and two phase systems (railway operation) exist. The common denominator here is that the transmission of the payload energy (to the consumers) is driven exclusively by the voltages between the phases. If an error occurs in the form of an isolation break-through between these phases, the line in question is disconnected and consumers connected thereto via the line switch 9.

However, the majority of electric faults occur between a single phase and ground (so-called grounding errors). Thereby, the entire system is shifted in relation to ground. Nevertheless, the voltages between the phases - which drive the payload energy - is not affected.

The error current at the actual location of the fault is determined by the other currents in the network (mainly capacitive, however also resistive discharge currents). The sum of these discharge currents to ground - including the current at the location of the fault - is always zero (Kirchhoff's current law). This follows from the fact that the current at the location of the fault may only be zero if the sum of all other currents is zero.

The purpose of the compensation device in both Figure 1 and 2 is to create this balance by producing a corresponding current between the zero point of the power network and ground.

Figure 1 thereby shows a known device for compensating for the residual operating current consisting of a zero-point reactor 5 with an auxiliary power winding 6 and an inverter 7 coupled thereto for compensation for the residual operating current. One spare means for disconnecting the line 8, e.g. in case of a fault in the compensation device, is also shown.

Figure 2 shows a device for compensating for the entire residual operating current by means of a controllable grounding transformer I according to the invention.

The control and measurement unit II continuously measures zero sequence admittance Y0 on the output lines L_{1-N} and in the grounding connection of the compensation device E. The latest measures are stored in the memory of the measurement unit. If a grounding error is detected, the measurement is repeated. Thereafter, Y0 values before and after the ground error instant are compared, line for line.

The ground error exists on the line which shows a deviation ΔY0 from its error-free measure. The deviation is used to control the compensation device. In Figure 1 it is the known device with an inverter 7 and in Figure 2 it is the controllable grounding transformer 1 according to the invention. In both cases, a voltage U_{EN} is generated between the zero point N of the power network and ground E.

When the voltage U_{EN} corresponds to the driving voltage at the location of the fault the deviation ΔY0 is reduced and thereby the residual operating current to zero (Thévenin's theorem).

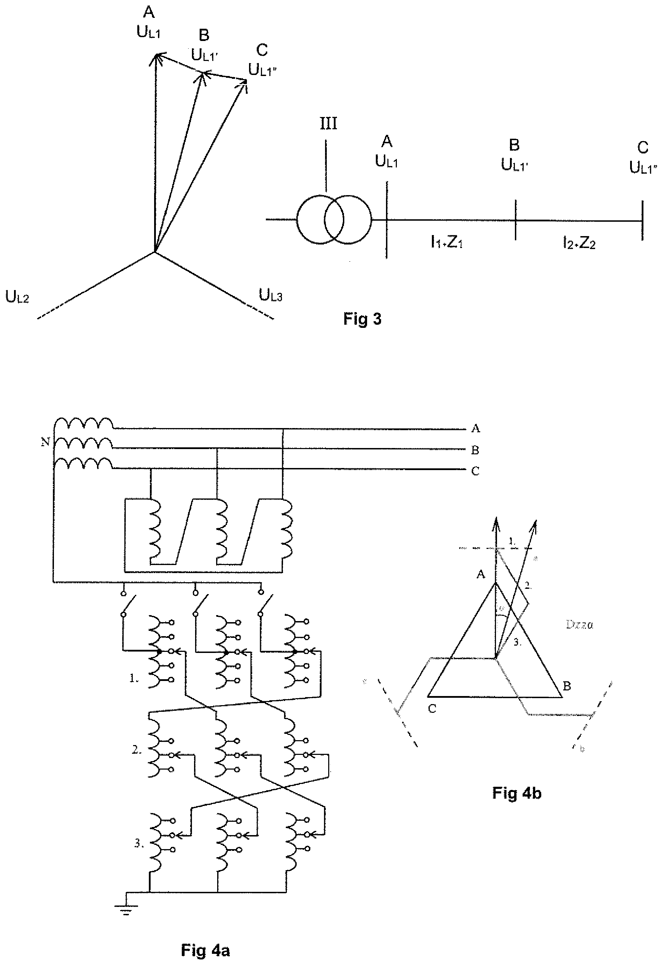

Figure 3 shows how the driving voltage depends on in which phase U_{L1}, U_{L2} or U_{L3} the fault has occurred and the location of the fault A, B or C in the distribution network. The driving voltage is represented by the phase voltage of the power transformer (in Figure 3 exemplified by the phase voltage U_{L1}) and the voltage drop over the line (Iₓ x Zₓ) between the power transformer and the location of the fault. The voltage drop over the line, in turn, is determined by the line's own impedance Zₓ and current load Iₓ, which as a rule has the same magnitude in all phases.

As is shown in Figure 3, the compensation device - in order to cancel the driving voltage at the location of the fault - must create a zero-point voltage which can be adjusted sufficiently with respect to amplitude and phase angle in relation to the voltage system of the power transformer.

Figure 4 shows a controllable three phase grounding transformer I according to the invention, which can generate such a zero-point voltage.

The transformer I has two tap-changers 10a, 10b by means of which three secondary voltages can be controlled with respect to amplitude and phase angle α in relation to the voltage system of the feeding power transformer III. The transformer may have three, four or more tap-changers. When a control and measurement unit 2 is used, the control and measurement unit II decides, in case of a ground fault, which of the secondary voltages that is to be coupled between the zero point of the grounding transformer and ground. Thereafter, the secondary voltage of the transformer is controlled until a condition for a full compensation for the residual operating current (ΔY0 = 0) is fulfilled.

Figure 4b shows a vector diagram for the grounding transformer in Figure 4a. The delta-coupled primary winding generates three voltages shifted 120° to one another in the nine secondary windings. By serial coupling, via two three-phase on-load tap-changers, each of three secondary windings 1, 2 and 3 can be connected to one another, such that three resulting voltages are created, which, in turn, can be controlled with respect to amplitude and phase in relation to the voltage system of the feeding power transformer.

The device may be used for complete compensation for the entire residual operating current. Alternatively, the device may advantageously be used also exclusively for residual current compensation in networks with existing Petersen-coil grounding.

The invention is not restricted to the described embodiments in the figures, but may be modified within the scope of the claims.

## Claims

1. A device comprising:
a controllable grounding transformer (I) arranged to compensate for a residual operating current in a grounding of an alternating-current network having a power transformer (III), and a unit (II), the device is **characterized in that**
a primary side of the grounding transformer (I) is coupled to the power network or a power source synchronized to the power network and a secondary side of the grounding transformer (I) is coupled between a zero point (N) of the power network and ground (E), wherein the grounding transformer (I) comprises two or more tap-changers of three-phase type (1-2, 2-3),
the primary side of the grounding transformer (I) is delta coupled, and
the secondary side of the grounding transformer (I) comprises said tap-changers (1-2, 2-3), which are arranged to interconnect windings (1, 2, 3) on the secondary side such that three resulting secondary voltages arise, which, in turn, via the unit (II) is arranged to be controlled with respect to amplitude and phase angle (α) in relation to the voltage system of the power transformer (III).

2. The device according to claim 1, **characterized in that** said unit is a control and measurement unit (II) coupled to the grounding transformer (I) in order to control said secondary voltages between the zero point (N) of the power network and ground (E).

3. The device according to claim 2, **characterized in that** the control and measurement unit (II) is arranged to decide which of the secondary voltages that is to be coupled between the zero point (N) of the power network and ground (E).

4. The device according to claims 2 or 3, **characterized in that** the control and measurement unit (II) is arranged to control the secondary voltage of the grounding transformer (I) until a condition for a full compensation for the residual operating current has been fulfilled.

5. The device according to any one of the claims 1 to 4, **characterized in that** the device is arranged to be used in parallel with a Petersen coil in order to eliminate a non-compensated for residual operating current from the Petersen coil.

6. A method of producing a zero-point voltage in an alternating-current network by means of a power transformer (III), **characterized by**
coupling a primary side of a grounding transformer (I) to the power network or a power source synchronized to the power network
coupling a secondary side of the grounding transformer (I) between a zero point (N) of the power network and ground (E), wherein the grounding transformer (I) comprises two or more tap-changers of three-phase type (1-2, 2-3), the primary side of the grounding transformer (I) being delta coupled, and the secondary side of the grounding transformer (I) comprising said tap-changers (1-2, 2-3), which are arranged to interconnect windings (1, 2, 3) on the secondary side, and
controlling the secondary voltages of the grounding transformer (I) with respect to amplitude and phase angle (α) in relation to the voltage system of the power transformer (III) by interconnecting the windings (1, 2, 3) on the secondary side of the grounding transformer (I) via said tap-changers (1-2, 2-3) such that three resulting voltages arise.

7. The method according to claim 6, wherein the zero-point voltage is produced in the alternating-current network to compensate for a residual operating current.

8. The method according to claim 6, wherein the zero-point voltage is produced in the alternating-current network in parallel with a Petersen coil to eliminate a non-compensated for residual operating current from the Petersen coil.

## Patentansprüche

1. Vorrichtung, umfassend:
einen steuerbaren Erdungstransformator (I), der angeordnet ist, um einen Restbetriebsstrom in einer Erdung eines Wechselstromnetzes mit einem Leistungstransformator (III) und einer Einheit (II) zu kompensieren, wobei die Vorrichtung **dadurch gekennzeichnet ist, dass**
eine Primärseite des Erdungstransformators (I) mit dem Stromnetz oder einer mit dem Stromnetz synchronisierten Stromquelle gekoppelt ist und eine Sekundärseite des Erdungstransformators (I) zwischen einem Nullpunkt (N) des Stromnetzes und der Erdung (E) gekoppelt ist, wobei der Erdungstransformator (I) zwei oder mehr Stufenschalter vom Dreiphasentyp (1-2, 2-3) umfasst,
die Primärseite des Erdungstransformators (I) deltagekoppelt ist, und
die Sekundärseite des Erdungstransformators (I) die Stufenschalter (1-2, 2-3) umfasst, die so angeordnet sind, dass sie Wicklungen (1, 2, 3) auf der Sekundärseite so miteinander verbinden, dass drei resultierende Sekundärspannungen entstehen, die wiederum über die Einheit (II) in Bezug auf Amplitude und Phasenwinkel (a) im Verhältnis zum Spannungssystem des Leistungstransformators (III) steuerbar sind.

2. Vorrichtung nach Anspruch 1, **dadurch gekennzeichnet, dass** es sich bei der Einheit um eine mit dem Erdungstransformator (I) gekoppelte Steuer- und Messeinheit (II) handelt, um die Sekundärspannungen zwischen dem Nullpunkt (N) des Stromnetzes und der Erdung (E) zu steuern.

3. Vorrichtung nach Anspruch 2, **dadurch gekennzeichnet, dass** die Steuer- und Messeinheit (II) angeordnet ist, um zu entscheiden, welche der Sekundärspannungen zwischen dem Nullpunkt (N) des Stromnetzes und der Erdung (E) gekoppelt werden soll.

4. Vorrichtung nach den Ansprüchen 2 oder 3, **dadurch gekennzeichnet, dass** die Steuer- und Messeinheit (II) angeordnet ist, um die Sekundärspannung des Erdungstransformators (I) zu steuern, bis eine Bedingung für eine vollständige Kompensation des Restbetriebsstroms erfüllt ist.

5. Vorrichtung nach einem der Ansprüche 1 bis 4, **dadurch gekennzeichnet, dass** die Vorrichtung angeordnet ist, um parallel mit einer Petersenspule verwendet zu werden, um einen nicht kompensierten Restbetriebsstrom aus der Petersenspule zu entfernen.

6. Verfahren zum Erzeugen einer Nullspannung in einem Wechselstromnetz mittels eines Leistungstransformators (III), **dadurch gekennzeichnet, dass**
eine Primärseite eines Erdungstransformators (I) mit dem Stromnetz oder einer mit dem Stromnetz synchronisierten Stromquelle gekoppelt wird,
eine Sekundärseite des Erdungstransformators (I) zwischen einem Nullpunkt (N) des Stromnetzes und einer Erdung (E) gekoppelt wird, wobei der Erdungstransformator (I) zwei oder mehr Stufenschalter vom Dreiphasentyp (1-2, 2-3) umfasst, wobei die Primärseite des Erdungstransformators (I) deltagekoppelt ist, und die Sekundärseite des Erdungstransformators (I) die Stufenschalter (1-2, 2-3) umfasst, die zum Verbinden von Wicklungen (1, 2, 3) auf der Sekundärseite angeordnet sind, und
die Sekundärspannungen des Erdungstransformators (I) in Bezug auf Amplitude und Phasenwinkel (a) im Verhältnis zum Spannungssystem des Leistungstransformators (III) gesteuert werden, indem die Wicklungen (1, 2, 3) auf der Sekundärseite des Erdungstransformators (I) über die Stufenschalter (1-2, 2-3) so verbunden werden, dass drei resultierende Spannungen entstehen.

7. Verfahren nach Anspruch 6, wobei die Nullspannung im Wechselstromnetz erzeugt wird, um einen Restbetriebsstrom zu kompensieren.

8. Verfahren nach Anspruch 6, wobei die Nullspannung im Wechselstromnetz parallel zu einer Petersenspule erzeugt wird, um einen nicht kompensierten Restbetriebsstrom aus der Petersenspule zu entfernen.

## Revendications

1. Dispositif comprenant :
un transformateur de mise à la terre contrôlable (I) agencé de manière à compenser un courant de fonctionnement résiduel dans une mise à la terre d'un réseau à courant alternatif présentant un transformateur de puissance (III), et une unité (II), dans lequel le dispositif est **caractérisé en ce que** :
un côté principal du transformateur de mise à la terre (I) est couplé au réseau électrique ou à une source d'alimentation synchronisée au réseau électrique, et un côté secondaire du transformateur de mise à la terre (I) est couplé entre un point zéro (N) du réseau électrique et la terre (E), dans lequel le transformateur de mise à la terre (I) comprend deux commutateurs à prises de réglage ou plus de type triphasé (1-2, 2-3) ;
le côté principal du transformateur de mise à la terre (I) est couplé en triangle ; et
le côté secondaire du transformateur de mise à la terre (I) comprend lesdits commutateurs à prises de réglage (1-2, 2-3), lesquels sont agencés de manière à interconnecter des enroulements (1, 2, 3) sur le côté secondaire, de sorte que trois tensions secondaires résultantes se produisent, lequel, à son tour, par l'intermédiaire de l'unité (II), est agencé de manière à être commandé relativement à l'amplitude et l'angle de phase (α) par rapport au système de tension du transformateur de puissance (III).

2. Dispositif selon la revendication 1, **caractérisé en ce que** ladite unité est une unité de commande et de mesure (II) couplée au transformateur de mise à la terre (I) afin de commander lesdites tensions secondaires entre le point zéro (N) du réseau électrique et la terre (E).

3. Dispositif selon la revendication 2, **caractérisé en ce que** l'unité de commande et de mesure (II) est agencée de manière à déterminer laquelle des tensions secondaires doit être couplée entre le point zéro (N) du réseau électrique et la terre (E).

4. Dispositif selon la revendication 2 ou 3, **caractérisé en ce que** l'unité de commande et de mesure (II) est agencée de manière à commander la tension secondaire du transformateur de mise à la terre (I) jusqu'à ce qu'une condition pour une compensation complète du courant de fonctionnement résiduel ait été satisfaite.

5. Dispositif selon l'une quelconque des revendications 1 à 4, **caractérisé en ce que** le dispositif est agencé de manière à être utilisé en parallèle avec une bobine d'extinction afin d'éliminer un courant de fonctionnement résiduel non compensé de la bobine d'extinction.

6. Procédé de production d'une tension de point zéro dans un réseau à courant alternatif au moyen d'un transformateur de puissance (III), **caractérisé par** les étapes ci-dessous consistant à :
coupler un côté principal d'un transformateur de mise à la terre (I) au réseau électrique ou à une source d'alimentation synchronisée au réseau électrique ;
coupler un côté secondaire du transformateur de mise à la terre (I) entre un point zéro (N) du réseau électrique et la terre (E), dans lequel le transformateur de mise à la terre (I) comprend deux commutateurs à prises de réglage ou plus du type triphasé (1-2, 2-3), le côté principal du transformateur de mise à la terre (I) étant couplé en triangle, et le côté secondaire du transformateur de mise à la terre (I) comprenant lesdits commutateurs à prises de réglage (1-2, 2-3) lesquels sont agencés de manière à interconnecter des enroulements (1, 2, 3) sur le côté secondaire ; et
commander les tensions secondaires du transformateur de mise à la terre (I) relativement à l'amplitude et à l'angle de phase (α) par rapport au système de tension du transformateur de puissance (III), en interconnectant les enroulements (1, 2, 3) sur le côté secondaire du transformateur de mise à la terre (I) par l'intermédiaire desdits commutateurs à prises de réglage (1-2, 2-3), de sorte que trois tensions résultantes se produisent.

7. Procédé selon la revendication 6, dans lequel la tension de point zéro est produite dans le réseau à courant alternatif pour compenser un courant de fonctionnement résiduel.

8. Procédé selon la revendication 6, dans lequel la tension de point zéro est produite dans le réseau à courant alternatif en parallèle avec une bobine d'extinction en vue d'éliminer un courant de fonctionnement résiduel non compensé de la bobine d'extinction.
